# EUROPÄISCHE PATENTANMELDUNG

(11) **EP 1 621 849 A1**
(43) Veröffentlichungstag der Anmeldung: **01.02.2006**
(21) Anmeldenummer: 05023411.1
(22) Anmeldetag: 14.11.2003
(51) Int. Cl.: G01B 11/04

(54) **Verfahren und Vorrichtung zur Erfassung von auf einem Fördermittel bewegten Objekten mittels eines optoelektronischen Sensors**

(30) Priorität: 20.12.2002 DE 10260201
(62) Teilanmeldung aus: 03026260.4
(71) Anmelder: SICK AG, 79183 Waldkirch/Breisgau (DE)
(72) Erfinder: Wehrle, Klemens, 79183 Waldkirch (DE); Nübling, Achim, 79312 Emmendingen (DE); Kaltenbach, Thomas, 79261 Gutach-Siegelau (DE); Uhl, Hubert, 79183 Waldkirch (DE)
(74) Vertreter: Manitz, Finsterwald & Partner GbR

(57) **Zusammenfassung**

Die Erfindung betrifft ein Verfahren und eine Vorrichtung zur Bestimmung der Abmessungen von auf einem Fördermittel bewegten Objekten mittels eines optoelektronischen Sensors, bei dem die Abmessungen der Objekte erfasst und dementsprechende, objektbezogene Werte geliefert werden, und bei dem der optoelektronische Sensor zusätzlich auch die Abmessungen des Fördermittels erfasst und dementsprechende, fördermittelbezogene Werte liefert, wobei durch eine Verrechnung der objektbezogenen Werte mit den fördermittelbezogenen Werten Fördermitteltoleranzen und/oder zwischen Objekt und Fördermittel ggf. vorhandene Hohlräume kompensiert werden.

## Beschreibung

Die Erfindung betrifft ein Verfahren zur Erfassung von auf einem segmentierten Fördermittel bewegten Objekten sowie ein Verfahren zur Bestimmung der Abmessungen von auf einem Fördermittel bewegten Objekten, und zwar jeweils mittels eines optoelektronischen Sensors. Weiterhin betrifft die Erfindung Vorrichtungen zur Durchführung der genannten Verfahren.

Verfahren und Vorrichtungen der erwähnten Art sind aus dem Stand der Technik bekannt und werden z.B. bei der automatischen Materialflusssteuerung eingesetzt. Typische Anwendungsgebiete sind Anlagen zur Paket- und Briefverteilung, automatische Gepäck-Sortieranlagen an Flughäfen sowie Anlagen zur Steuerung von automatisierten Warenflüssen.

Wenn Objekte auf einem segmentierten Fördermittel transportiert werden, kommt es in der Praxis, beispielsweise beim Transport von Paketen oder Koffern, relativ häufig vor, dass die Objekte nicht mit ihrer gesamten Grundfläche auf einem Fördersegment, wie zum Beispiel einer Schale oder einer Wanne, aufliegen, sondern über das jeweilige Fördersegment hinausragen. In diesem Fall kann es geschehen, dass insbesondere dann, wenn ein Objekt so weit über ein Fördersegment hinausragt, dass es letztlich auf zwei benachbarten Fördersegmenten zu liegen kommt, keine korrekte Zuordnung zwischen Objekt und Fördersegment erfolgen kann. Dies ist natürlich von Nachteil, da die Erfassung der Objekte mittels des optoelektronischen Sensors u.a. eine genaue Zuordnung zwischen Objekt und Fördersegment ermöglichen soll.

Bei anderen Anwendungsfällen, bei denen zum Beispiel die Abmessungen von auf einem segmentierten oder einem unsegmentierten Fördermittel bewegten Objekten mittels eines optoelektronischen Sensors bestimmt werden sollen, ist es problematisch, dass das Fördermittel oftmals mit mechanischen Toleranzen behaftet ist, die dann zu einer Verfälschung des Messergebnisses führen. Konkret kann sich die Oberfläche des Fördermittels bei verschiedenen zu messenden Objekten auf unterschiedlichen Absoluthöhen befinden, so dass hier bei jeweils gleich hohen Objekten aufgrund der unterschiedlichen Absoluthöhen der Fördermitteloberfläche auf fehlerhafte Weise unterschiedliche Objekthöhen ermittelt werden.

Weiterhin ist bei bekannten Systemen von Nachteil, dass im Rahmen der Bestimmung von Abmessungen der geförderten Objekte diese oftmals nur in demjenigen Bereich abgetastet werden, mit dem sie sich im Bereich eines Fördersegments befinden. Objektteile, die über ein Fördersegment hinausragen, werden nicht erfasst, was letztlich dazu führt, dass falsche Objektabmessungen bestimmt werden.

Eine Aufgabe der vorliegenden Erfindung besteht folglich darin, Verfahren und Vorrichtungen der eingangs genannten Art bereitzustellen, die eine zumindest weitgehend fehlerfreie Bestimmung von Objektabmessungen ermöglichen.

Diese Aufgabe wird erfindungsgemäß durch die Merkmale des Patentanspruchs 1 und insbesondere durch ein Verfahren zur Bestimmung der Abmessungen von auf einem Fördermittel bewegten Objekten mittels eines optoelektronischen Sensors gelöst, bei dem die Abmessungen der Objekte erfasst und dementsprechende, objektbezogene Werte geliefert werden, und bei dem der optoelektronische Sensor zusätzlich auch die Abmessungen des Fördermittels erfasst und dementsprechende, fördermittelbezogene Werte liefert, wobei durch eine Verrechnung der objektbezogenen Werte mit den fördermittelbezogenen Werten Fördermitteltoleranzen und/oder zwischen Objekt und Fördermittel ggf. vorhandene Hohlräume kompensiert werden.

Eine erfindungsgemäße Vorrichtung zur Durchführung dieses Verfahrens umfasst ein Fördermittel sowie einen optoelektronischen Sensor zur Erfassung der Abmessungen der Objekte und zur Bereitstellung entsprechender objektbezogener Werte, wobei der optoelektronische Sensor zur zusätzlichen Erfassung der Abmessungen des Fördermittels und zur Bereitstellung entsprechender fördermittelbezogener Werte ausgelegt ist, und wobei eine Kompensationseinheit zur Kompensation von Fördermitteltoleranzen und/oder zwischen Objekt und Fördermittel ggf. vorhandenen Hohlräumen vorgesehen ist.

Erfindungsgemäß werden also die Abmessungen von auf einem Fördermittel bewegten Objekten exakt ermittelt. Diese genaue Ermittlung der Abmessungen wird erfindungsgemäß möglich, da mittels des optoelektronischen Sensors nicht nur die Abmessungen der Objekte sondern zusätzlich auch die Abmessungen des Fördermittels erfasst werden. Auf diese Weise können beispielsweise Fördermitteltoleranzen quantitativ ermittelt und bei der Berechnung der Abmessungen der Objekte berücksichtigt werden. Wenn zum Beispiel Objekte auf einem segmentierten Fördermittel transportiert werden, bei dem einige Fördersegmente näher am optoelektronischen Sensor vorbeigeführt werden als andere Fördersegmente, wird erfindungsgemäß der variierende Abstand zwischen den Fördersegmenten und dem optoelektronischen Sensor bestimmt, so dass bei der Ermittlung der Abmessungen der Objekte klar unterschieden werden kann, ob beispielsweise ein Objekt höher als ein anderes ist oder ob ein vermeintlich höheres Objekt lediglich auf einem erhöhten Fördersegment liegt. Die beschriebene Kompensation von Fördermitteltoleranzen kann bei dem geschilderten Beispiel durch eine einfache Subtraktion der ermittelten Abstandsschwankung zwischen Fördersegmenten und optoelektronischem Sensor von den objektbezogenen Abstandswerten realisiert werden.

Erfindungsgemäß ist es bevorzugt, wenn die Abmessungen des Fördermittels und/oder der Objekte in allen drei Dimensionen erfasst werden. Auf diese Weise wird zum Beispiel eine korrekte Volumenberechnung der erfassten Objekte möglich.

Weiterhin können im Rahmen der Erfindung die Sollabmessungen des Fördermittels gespeichert und mit den erfassten Istabmessungen des Fördermittels verglichen werden, wobei das Ergebnis dieses Vergleichs als Korrekturwert zur Kompensation herangezogen wird. Die Istabmessungen des Fördermittels können beispielsweise dadurch ermittelt werden, dass das von Objekten freie Fördermittel durch den Erfassungsbereich des optoelektronischen Sensors bewegt wird. Die Sollabmessungen des Fördermittels können hingegen als feste Zahlenwerte vorgegeben werden.

Im Rahmen der Erfindung ist es zusätzlich wünschenswert, Verfahren und Vorrichtungen der eingangs genannten Art bereitzustellen, die eine korrekte Zuordnung von Objekt und Fördersegment ermöglichen.

Diese Erfindungsvariante kann dadurch realisiert werden, dass auf einem segmentierten Fördermittel bewegte Objekte mittels eines optoelektronischen Sensors erfasst werden, wobei über den optoelektronischen Sensor jeweils der geometrische Schwerpunkt der Objekte bestimmt wird, woraufhin die Objekte jeweils demjenigen Fördersegment zugeordnet werden, in dessen Bereich sich der jeweils bestimmte geometrische Schwerpunkt befindet.
Eine bevorzugte Vorrichtung zur Durchführung der letztgenannten Erfindungsvariante umfasst ein segmentiertes Fördermittel sowie einen optoelektronischen Sensor, welcher mit einer Auswerteeinheit zur Bestimmung der geometrischen Schwerpunkte der Objekte gekoppelt ist, wobei eine Zuordnungseinheit zur Zuordnung der Objekte zu demjenigen Fördersegment, in dessen Bereich sich der jeweils bestimmte Schwerpunkt befindet, vorgesehen ist.

Diese Variante macht sich die Erkenntnis zunutze, dass sich der geometrische Schwerpunkt eines Objekts in der Regel im Bereich des ihm zugeordneten Fördersegments befindet, unabhängig davon, ob Teile des Objektes über das Fördersegment hervorragen oder nicht. Durch die erfindungsgemäß erfolgende Zuordnung eines Objekts zu demjenigen Fördersegment, in dessen Bereich sich der geometrische Schwerpunkt des jeweiligen Objekts befindet, lässt sich erfindungsgemäß mit sehr hoher Wahrscheinlichkeit eine korrekte Zuordnung zwischen Objekt und Fördersegment erzielen.

Durch die zuletzt erläuterte bevorzugte Erfindungsvariante kann erreicht werden, dass beim Transport von Objekten auf segmentierten Fördermitteln zum einen eine korrekte Zuordnung zwischen Objekten und Fördermitteln sichergestellt wird und gleichzeitig eine sehr genaue Bestimmung der Abmessungen der erfassten Objekte ermöglicht wird.

Für eine korrekte Ermittlung des geometrischen Schwerpunkts ist es von Vorteil, wenn auch solche Objekte vom optoelektronischen Sensor vollständig erfasst werden, die teilweise außerhalb eines Fördersegments liegen oder die sich im Bereich von zwei aufeinanderfolgenden Fördersegmenten befinden. Durch die vollständige Erfassung der Objekte wird sichergestellt, dass die sich parallel zur Förderebene erstreckende Kontur der Objekte unabhängig von ihrer relativen Lage zu den Fördersegmenten korrekt erfasst wird, so dass eine genaue und korrekte Berechnung des geometrischen Schwerpunkts möglich ist.

Der geometrische Schwerpunkt kann grundsätzlich auf Grundlage der erfassten tatsächlichen Objektgrundfläche, der erfassten projizierten Objektgrundfläche oder des erfassten Objektvolumens bestimmt werden. Bei den ersten beiden Varianten ist eine durch den optoelektronischen Sensor erfolgende Abstandsmessung nicht unbedingt erforderlich, wohingegen eine solche Abstandsmessung zur Bestimmung des Objektvolumens benötigt wird.

Von Vorteil ist es ferner, wenn für diejenigen Fördersegmente, die - bevor sie den Erfassungsbereich des optoelektronischen Sensors erreicht haben - mit einem Objekt beschickt wurden, jeweils ein Triggersignal erzeugt wird. Ob einem Fördersegment ein Triggersignal zugeordnet wird oder nicht, kann beispielsweise manuell, durch eine den Beschickungsvorgang überwachende Person entschieden werden. Alternativ kann ein solches Triggersignal auch automatisch von einer übergeordneten Steuereinheit generiert werden, welche den Beschickungsprozess des Fördermittels steuert oder überwacht und welcher dementsprechend bekannt ist, ob ein bestimmtes Fördersegment mit einem Objekt beschickt wurde.

Ein Triggersignal der genannten Art kennzeichnet bevorzugt den Anfang und das Ende jedes mit einem Objekt beschickten Fördersegments, wobei die Dauer des Triggersignals bevorzugt der in Förderrichtung verlaufenden Länge eines Fördersegments entspricht. Alternativ könnten auch dem Anfang und dem Ende jedes beschickten Fördersegments ein kurzes Einzeltriggersignal zugeordnet werden, wobei sich die Einzeltriggersignale für Anfang und Ende des Fördersegments bevorzugt voneinander unterscheiden.

Ein über die gesamte Länge eines Fördersegments andauerndes Triggersignal kann beispielsweise immer in demjenigen Zeitintervall erzeugt werden, in welchem ein mit einem Objekt beschicktes Fördersegment den Erfassungsbereich eines erfindungsgemäß vorgesehenen optoelektronischen Sensors durchläuft. In diesem Fall kann dem optoelektronischen Sensor bzw. einer Auswerte- oder Datenverarbeitungseinheit mitgeteilt werden, in welchem Zeitraum der optoelektronische Sensor ein mit einem Objekt beschicktes Fördersegment abtastet und in welchem Zeitraum der optoelektronische Sensor den Zwischenraum zwischen zwei aufeinanderfolgenden Fördersegmenten oder ein nicht mit einem Objekt beschicktes Fördersegment abtastet. Auf diese Weise kann problemlos eine auf die jeweilige Position bezogene relative Zuordnung zwischen Objekt und Fördersegment erfolgen, was gleichbedeutend damit ist, dass einer Auswerte-oder Datenverarbeitungseinheit mitgeteilt werden kann, wo genau sich Objektteile auf einem Fördersegment oder zwischen zwei aufeinanderfolgenden Fördersegmenten befinden.

So kann dann auf einfache Weise eine Zuordnung der Objekte zu den Fördersegmenten erfolgen, und zwar durch einen Vergleich der ermittelten Positionen der geometrischen Schwerpunkte der Objekte mit den über das Triggersignal ermittelten Positionen der mit Objekten beschickten Fördersegmente. Hierbei genügt es, wenn lediglich Relativpositionen zwischen Objekten und Fördersegmenten verarbeitet werden.

Es kann dann synchron sowie zeit- oder wegeverzögert zum Triggersignal ein Zuordnungssignal ausgegeben werden. Eine Ausgabe eines Zuordnungssignals während oder exakt am Ende eines Triggersignals ist erfindungsgemäß nicht möglich, da die Objekte über das Ende eines Fördersegments hervorstehen können und somit die vollständige Erfassung solcher Objekte erst nach Beendigung des Triggersignals, also nachdem das betreffende Fördersegment den Erfassungsbereich des optoelektronischen Sensors verlassen hat, abgeschlossen werden kann. Eine im Vergleich zum Triggersignal zeitverzögerte Ausgabe eines Zuordnungssignals ist dann möglich, wenn sich die Fördersegmente mit konstanter Geschwindigkeit bewegen oder wenn die Verzögerungszeitspanne in Abhängigkeit von der Geschwindigkeit der Fördersegmente variabel eingestellt wird. Eine wegeverzögerte Ausgabe des Zuordnungssignals bietet sich dann an, wenn die Fördersegmente mit einem Positionsgeber, beispielsweise einem Drehgeber gekoppelt sind, welcher einer die Ausgabe des Zuordnungssignals auslösenden Steuereinheit jeweils mitteilt, wie weit sich die Fördersegmente jeweils vom Erfassungsbereich des optoelektronischen Sensors wegbewegt haben.

Besonders vorteilhaft lässt sich diejenige Erfindungsvariante, welche eine korrekte Zuordnung von Objekt und Fördersegment ermöglicht, einsetzen, wenn ein auf einem Objekt befindliches Element, insbesondere ein Code, ein Barcode oder ein Adressaufkleber erfasst und einem Objekt zugeordnet werden soll. In diesem Fall kann nämlich ein solches erfasstes Element immer demjenigen Objekt zugeordnet werden, dessen geometrischer Schwerpunkt oder dessen parallel zur Förderebene verlaufende Kontur dem erfassten Element am nächsten ist. Auf diese Weise wird mit hoher Wahrscheinlichkeit sichergestellt, dass das erfasste Element dem jeweils zugehörigen Objekt zugeordnet wird, wobei es hierfür natürlich nötig ist, die Relativposition des erfassten Elements zu dem erfassten Objekt oder seinem geometrischen Schwerpunkt zu ermitteln.

Grundsätzlich ist es bevorzugt, wenn die Objekte von dem optoelektronischen Sensor kontinuierlich über ihre gesamte, sich in Förderrichtung erstreckende Länge und/oder über ihre gesamte, sich quer zur Förderrichtung erstreckende Breite erfasst werden. Wenn sowohl Länge als auch Breite der Objekte vollständig erfasst werden, wird insbesondere eine korrekte Volumenberechnung möglich und auch die Wahrscheinlichkeit für eine korrekte Zuordnung zwischen Objekten und Fördersegmenten wird so sehr hoch.

Bei bestimmten Anwendungen ist es schwierig, nahe beieinanderliegende oder direkt aneinander angrenzende Objekte, welche auf einem Fördermittel gefördert werden, voneinander zu unterscheiden. Für diese Unterscheidung kann im Rahmen der beiden erfindungsgemäßen Varianten auf die Konturen, die unterschiedlichen Kontraste und/oder die unterschiedlichen Farben der jeweils erfassten Objekte zurückgegriffen werden. Durch die zusätzliche Berücksichtigung dieser Parameter - neben den ermittelten Abmessungen der Objekte - wird es möglich, diese auch dann voneinander zu unterscheiden, wenn sie nahe beieinander liegen oder direkt aneinander angrenzen.

Die vorstehend erwähnten Vorrichtungen zur Durchführung der erfindungsgemäßen Verfahren können jeweils mit einer Auswerte- bzw. Datenverarbeitungseinheit versehen bzw. gekoppelt werden, die derart ausgelegt ist, dass eine oder mehrere der beschriebenen bevorzugten Verfahrensvarianten realisiert werden können. Falls diejenige Erfindungsvariante, welche zusätzlich eine korrekte Zuordnung von Objekt und Fördersegment ermöglicht, realisiert werden soll, ist es selbstverständlich möglich, nur eine einzige Datenverarbeitungseinheit einzusetzen, die sämtliche erfindungsgemäße Verfahren umsetzt.

Der erfindungsgemäß eingesetzte optoelektronische Sensor kann beispielsweise als Lichtschranke, als Scanner oder als Kamera ausgebildet sein, wobei er insbesondere so ausgeführt wird, dass er nicht nur zur Feststellung eines Objektes, sondern darüber hinaus auch zur Bestimmung von Abständen ausgelegt ist. Besonders bevorzugt ist es, wenn der optoelektronische Sensor als Laserscanner mit quer oder schräg zur Förderrichtung verlaufender Abtastrichtung ausgebildet wird.

Der optoelektronische Sensor oder eine mit ihm gekoppelte Auswerte- oder Datenverarbeitungseinheit kann zur Codeerkennung und/oder Bildverarbeitung ausgelegt werden, um so zusätzlich die Erkennung von speziellen, am Objekt befindlichen Elementen, wie beispielsweise Barcodes, zu ermöglichen.

Das erfindungsgemäß zum Einsatz gelangende Fördermittel kann beispielsweise als Förderband, Schalenförderer, Wannenförderer oder als Crossbelt-Förderer ausgebildet werden.

Weitere bevorzugte Ausführungsformen der erfindungsgemäßen Verfahren und Vorrichtungen sind in den Unteransprüchen beschrieben.

Die Erfindung wird nachfolgend anhand von Ausführungsbeispielen unter Bezugnahme auf die Figuren erläutert; in diesen zeigen:
- Fig. 1: eine perspektivische Ansicht eines segmentierten Fördermittels mit darauf befindlichen Objekten gemäß einer bevorzugten Variante der Erfindung,
- Fig. 2: eine Fig. 1 entsprechende Ansicht mit einem gegenüber den anderen Fördersegmenten höhenversetzten Fördersegment,
- Fig. 3: eine Ansicht gemäß Fig. 1 mit Objekten, die einen Barcode tragen,
- Fig. 4: eine Ansicht gemäß Fig. 1 mit zwei einander berührenden Objekten,
- Fig. 5: eine Ansicht gemäß Fig. 1 mit einander in Förderrichtung überschneidenden Objekten,
- Fig. 6: eine Draufsicht auf eine Anordnung gemäß Fig. 1 mit einander in Förderrichtung überschneidenden Objekten,
- Fig. 7: einen Schnitt durch ein schalenförmiges Fördersegment mit einem darauf befindlichen Objekt, wobei der Schnitt quer zur Förderrichtung verläuft, und
- Fig. 8: eine Ansicht gemäß Fig. 7 mit einem gegenüber Fig. 7 verkippten Objekt.

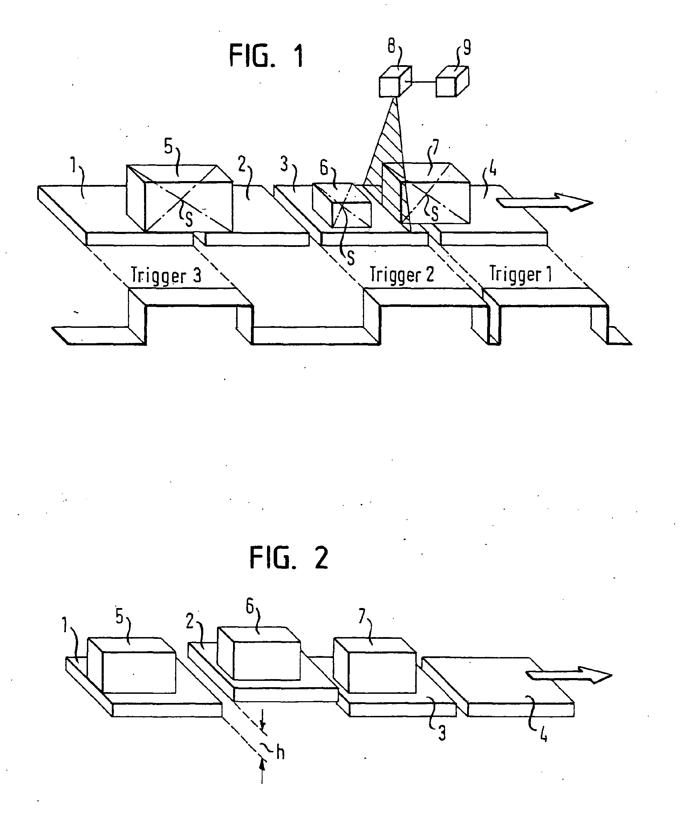

Fig. 1 zeigt in perspektivischer Ansicht ein Fördermittel, welches aus einzelnen, in Förderrichtung (Pfeil) aufeinanderfolgender Fördersegmenten 1 bis 4 besteht. Die Fördersegmente 1 bis 4 sind in Fig. 1 schematisch als quadratische Plattenelemente dargestellt, in der Praxis können diese Fördersegmente 1 bis 4 beispielsweise auch als Wannen oder Schalen ausgeführt sein. Insbesondere ist es auch möglich, das gesamte Fördermittel als Crossbelt-Förderer auszubilden, bei dem jedes einzelne Fördersegment 1 bis 4 ein weiteres, eigenes Fördermittel aufweist, welches einen Transport quer zur eigentlichen Förderrichtung des Fördermittels besitzt, um so ein Beschicken des Fördermittels oder ein Ausschleusen von Objekten aus der Förderstrecke zu ermöglichen.

Auf den Fördersegmenten 1 bis 4 befinden sich einzelne, verschieden große Objekte 5 bis 7, welche jeweils eine Quaderform aufweisen. Das Objekt 5 befindet sich mit ähnlich großen Bereichen auf den Fördersegmenten 1 und 2 und erstreckt sich somit auch über den zwischen diesen beiden Fördersegmenten 1 und 2 befindlichen Zwischenraum, wobei allerdings der auf dem Fördersegment 1 aufliegende Bereich geringfügig größer ist als der auf dem Fördersegment 2 aufliegende Bereich. Das Objekt 6 befindet sich vollständig auf dem Fördersegment 3. Das Objekt 7 befindet sich mit seinem größeren Bereich auf dem Fördersegment 4 und mit seinem kleineren Bereich auf dem Fördersegment 3, so dass auch dieses Objekt 7 den zwischen den Fördersegmenten 3 und 4 befindlichen Zwischenraum überdeckt.

Oberhalb des aus den Fördersegmenten 1 bis 4 bestehenden Fördermittels ist ein optoelektronischer Sensor 8 angeordnet, welcher als Laserscanner mit quer zur Förderrichtung verlaufender Abtastrichtung ausgeführt ist. Der Öffnungswinkel des Abtaststrahls ist dabei so groß bemessen, dass zumindest die gesamte Breite des Fördermittels, vorzugsweise aber ein noch größerer Bereich, erfasst werden kann. Bei entsprechend großer Ausbildung des Abtastwinkels ist sichergestellt, dass auch sehr große Objekte und insbesondere auch solche, die seitlich über die Fördersegmente 1 bis 4 hinausragen, vollständig erfasst werden können.

Der optoelektronische Sensor 8 ist gekoppelt mit einer Auswerte- bzw. Datenverarbeitungseinheit 9, in welcher die vom optoelektronischen Sensor 8 gelieferten Signale sowie das nachstehend noch erläuterte Triggersignal verarbeitet werden.

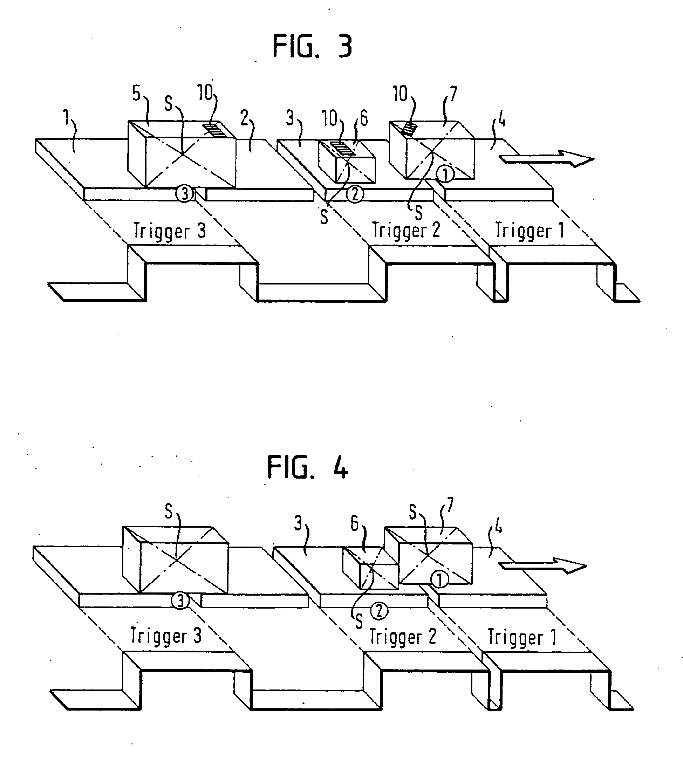

Fig. 1 veranschaulicht ferner das genannte Triggersignal, welches diejenigen Fördersegmente 1, 3, 4 kennzeichnet, die zuvor mit einem Objekt 5, 6, 7 beschickt wurden. Zum besseren Verständnis wurde das Triggersignal in Fig. 1 (wie auch in den Fig. 3 bis 6) über dem Ort aufgetragen, obwohl das Triggersignal in der Praxis als über die Zeit veränderliches Signal vorliegt. Konkret kann das Triggersignal beispielsweise immer dann aktiv sein, wenn sich ein Bereich eines zuvor mit einem Objekt 5, 6, 7 beschickten Fördersegments 1, 3, 4 im Erfassungsbereich des optoelektronischen Sensors befindet. Umgekehrt ist das Triggersignal immer passiv, wenn sich Bereiche eines zuvor nicht mit einem Objekt beschickten Fördersegments 2 oder ein Zwischenraum zwischen zwei aufeinanderfolgenden Fördersegmenten 1 bis 4 im Erfassungsbereich des optoelektronischen Sensors befinden. Somit liefert das Triggersignal an die Auswerteschaltung 9 synchron zu den vom optoelektronischen Sensor jeweils erfassten Werten eine Information darüber, ob vom optoelektronischen Sensor gerade
- ein zuvor mit einem Objekt 5 bis 7 beschicktes Fördersegment 1, 3, 4,
- ein zwischen den Fördersegmenten 1 bis 4 jeweils befindlicher Zwischenraum, oder
- ein zuvor nicht mit einem Objekt beschicktes Fördersegment 2 erfasst wird.

Bei einem Verfahren gemäß Stand der Technik tastet der optoelektronische Sensor 8 immer nur dann ab, wenn ein Triggersignal anliegt. Im Beispiel der Fig. 1 würden dementsprechend die Fördersegmente 4, 3 und 1 vollständig abgetastet, nicht jedoch die zwischen den Fördersegmenten 1 bis 4 befindlichen Zwischenräume und auch nicht das Fördersegment 2. Dies hat dann gemäß Stand der Technik zur Folge, dass auf dem Fördersegment 4 nur derjenige Bereich des Objektes 7 erfasst würde, der sich auf dem Fördersegment 4 befindet, wohingegen der auf dem Fördersegment 3 befindliche Bereich des Objektes 7 als separates Objekt erfasst würde. Es würden also anstelle eines einzigen Objektes 7 auf fehlerhafte Weise zwei kleinere Objekte erfasst, von denen sich eines auf dem Fördersegment 3 und ein anderes auf dem Fördersegment 4 befindet. Entsprechendes würde gemäß Stand der Technik für das Objekt 5 gelten, welches sich mit unterschiedlichen Bereichen auf den Fördersegmenten 1 und 2 befindet. Demzufolge ist gemäß Stand der Technik keine korrekte Überprüfung dahingehend möglich, ob sich ein Objekt, welches auf einem Fördersegment abgelegt wurde, im Bereich des optoelektronischen Sensors 8 tatsächlich noch auf diesem Fördersegment befindet.

Gemäß der bevorzugten Variante der Erfindung erfolgt nun eine Erfassung durch den optoelektronischen Sensor 8 nicht nur dann, wenn ein Triggersignal anliegt. Vielmehr erfolgt eine kontinuierliche, zu keinem Zeitpunkt unterbrochene Erfassung der Objekte 5 bis 7 unabhängig davon, ob sie sich auf einem Fördersegment 1 bis 4 oder im Bereich eines zwischen den Fördersegmenten 1 bis 4 ausgebildeten Zwischenraums befinden. Da auf diese Weise immer eine vollständige Erfassung der Objekte 5 bis 7 sichergestellt ist, kann erfindungsgemäß in der Auswerte- bzw. Datenverarbeitungseinheit 9 mittels eines geeigneten Verfahrens der geometrische Schwerpunkt S der Objekte 5 bis 7 ermittelt werden. Dadurch, dass der Auswerte- bzw. Datenverarbeitungseinheit 9 zudem auch das Triggersignal zur Verfügung steht, kann die Relativposition der ermittelten Schwerpunkte S zu den Fördersegmenten 1 bis 4 ermittelt werden. Dementsprechend ist es dann auch möglich, dasjenige Fördersegment 1 bis 4 zu bestimmen, oberhalb dessen sich ein bestimmter geometrischer Schwerpunkt S befindet. Konkret erfolgt dann eine Zuordnung der Objekte 5 bis 7 zu denjenigen Fördersegmenten 1 bis 4, in dessen Bereich sich der geometrische Schwerpunkt der Objekte 5 bis 7 jeweils befindet. Im Beispiel gemäß Fig. 1 befindet sich der geometrische Schwerpunkt des Objektes 5 im Bereich des Fördersegments 1, der geometrische Schwerpunkt des Objekts 6 im Bereich des Fördersegments 3 und der geometrische Schwerpunkt des Objekts 7 im Bereich des Fördersegments 4. Es werden also auf korrekte Art und Weise insgesamt drei Objekte 5 bis 7 erkannt, die jeweils korrekt denjenigen Fördersegmenten 1, 3 und 4 zugeordnet werden, auf denen sie ursprünglich abgelegt wurden.

In den nachfolgend erläuterten Fig. 2 bis 6 ist aus Gründen der Übersichtlichkeit der optoelektronische Sensor 8 sowie die Auswerte- bzw. Datenverarbeitungseinheit 9 nicht dargestellt, obwohl diese Elemente 8, 9 auch bei Anordnungen gemäß den Fig. 2 bis 6 vorhanden sind.

Fig. 2 zeigt eine Anordnung gemäß Fig. 1, wobei hier das Fördersegment 2 infolge von Toleranzen um einen Betrag h gegenüber den anderen Fördersegmenten 1, 3, 4 erhöht ist. Dies würde gemäß Stand der Technik beim Abtasten des Objektes 6, welches sich auf dem erhöhten Fördersegment 2 befindet, dazu führen, dass bezüglich des Objektes 6 eine um den Betrag h vergrößerte Höhe des Objektes 6 ermittelt wird. Wenn in diesem Fall dann die vom optoelektronischen Sensor 8 ermittelten Werte zur Berechnung des Volumens oder der Abmessungen des Objektes 6 herangezogen würden, träte infolge der erhöhten Position des Fördersegments 2 ein Fehler auf.

Erfindungsgemäß erfasst nun der optoelektronische Sensor 8 nicht nur das Objekt 6, sondern auch diejenigen Bereiche des Fördersegments 2, die nicht vom Objekt 6 bedeckt sind. Alternativ könnte der optoelektronische Sensor 8 auch das leere Fördersegment 2 im Rahmen eines Testlaufs erfassen. Auf jeden Fall können der Auswerte- bzw.- Datenverarbeitungseinheit 9 neben den auf das Objekt bezogenen Werten auch noch ausschließlich auf das Fördersegment 2 bezogene Werte zur Verfügung gestellt werden, so dass letztlich die Höhenposition des Fördersegments 2 bekannt ist. Wenn der Auswerte- bzw. Datenverarbeitungseinheit 9 zusätzlich auch noch die Sollhöhe des Fördersegments 2, die der Höhe der nicht mit Toleranzen behafteten Fördersegmente 1, 3, 4 entspricht, bekannt ist, kann die Abweichung der Isthöhe des Fördersegments 2 gegenüber der Sollhöhe berechnet werden und diese Abweichung als Korrekturwert in die Berechnung der Abmessungen bzw. des Volumens des Objektes 6 einbezogen werden. Auf diese Weise lassen sich erfindungsgemäß die Abmessungen bzw. das Volumen des Objektes 6 auch dann korrekt berechnen, wenn die Höhe des Fördersegments 2 von dessen Sollhöhe abweicht, wie in Fig. 2 dargestellt.

Fig. 3 zeigt eine Darstellung gemäß Fig. 1 mit dem Unterschied, dass auf den Objekten 5 bis 7 jeweils Barcodes 10 angebracht sind. Hier stellt sich gemäß Stand der Technik oftmals das Problem, dass nicht klar ist, welchem Objekt ein erfasster Barcode zuzuordnen ist. Gemäß aus dem Stand der Technik bekannten Verfahren wird üblicherweise ermittelt, im Bereich welchen Fördersegments sich ein Barcode befindet, woraufhin dieser Barcode dann demjenigen Objekt zugeordnet wird, welches sich ebenfalls auf dem betreffenden Fördersegment befindet. Dies kann zu Fehlern führen, wenn auf einem Fördersegment zwei voneinander verschiedene Objekte erfasst werden oder wenn ein Objekt über ein Fördersegment hinaussteht.

Die beschriebene Problematik wird erfindungsgemäß dadurch gelöst, dass ein erfasster Barcode 10 immer demjenigen Objekt zugeordnet wird, dessen geometrischer Schwerpunkt S dem erfassten Barcode 10 am nächsten ist. Der geometrische Schwerpunkt S sowie die Position des Barcodes 10 werden gemäß Fig. 3 ebenso ermittelt, wie bezüglich Fig. 1 bereits erläutert. Auf diese Weise wird eine eindeutige und korrekte Zuordnung eines Barcodes zu einem zugehörigen Objekt 5 bis 7 möglich, und zwar unabhängig davon, ob das Objekt 5 bis 7 über ein Fördersegment 1 bis 4 hervorragt oder ob sich zwei Objekte 6, 7 innerhalb des Bereichs eines einzelnen Fördersegments 3 befinden. Eine korrekte Zuordnung des Barcodes 10 zum Objekt 7 ist sogar dann möglich, wenn sich der Barcode 10 außerhalb desjenigen Fördersegments 4 befindet, welchem das Objekt 7 gemäß der Lage seines geometrischen Schwerpunkts S zugeordnet wird, da auch in diesem Fall der Abstand das Barcodes 10 vom geometrischen Schwerpunkt S des Objekts 7 geringer ist, als der Abstand des genannten Barcodes 10 von den geometrischen Schwerpunkten der anderen Objekte 5,6.

Fig. 4 veranschaulicht, dass die erfindungsgemäßen Verfahren auch dann funktionieren, wenn sich zwei Objekte 6, 7 berühren und dementsprechend keine Lücke zwischen diesen beiden Objekten 6, 7 vorhanden ist. Zum korrekten Ablauf der erfindungsgemäßen Verfahren ist es lediglich erforderlich, dass der optoelektronische Sensor beispielsweise über die Bestimmung der Geometrie der beiden einander berührenden Objekte 6, 7 eine Unterscheidung zwischen beiden Objekten treffen kann. Wenn beispielsweise bekannt ist, dass nur quaderförmige Objekte anfallen, kann beim in Fig. 4 dargestellten Beispiel eine Unterscheidung zwischen den beiden Objekten 6, 7 bereits allein aufgrund ihrer unterschiedlichen Höhe erfolgen. Alternativ wäre es aber auch möglich, mittels des optoelektronischen Sensors 8 von jedem Objekt 6, 7 zumindest drei Eckpunkte seiner Oberfläche zu erfassen, aus denen dann die Position der Objekte 6, 7 berechnet werden kann.

Alternativ oder zusätzlich können die einander berührenden Objekte 6, 7 auch aufgrund ihrer Konturen, ihres Kontrastes und/oder ihrer Farbe voneinander unterschieden werden, wobei auch diese Parameter von dem optoelektronischen Sensor 8 erfassbar sind.

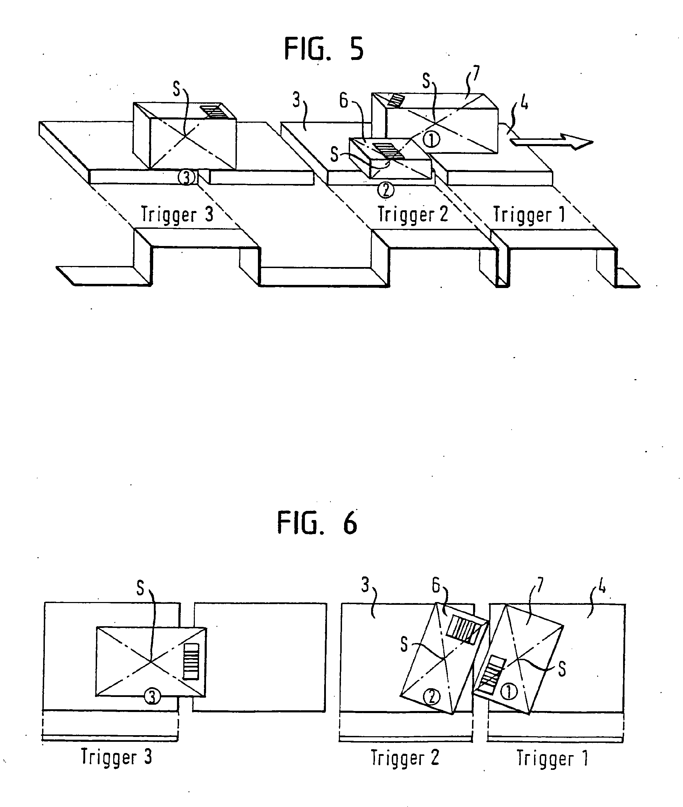

Die gemäß Fig. 4 beschriebene Unterscheidbarkeit von einander berührenden Objekten 6, 7 ist gemäß den Fig. 5 und 6 auch bei solchen Objekten gegeben, die in Förderrichtung seitlich zueinander versetzt auf den Fördersegmenten 1 bis 4 liegen bzw. deren sich in Transportrichtung erstreckende Längsausdehnung sich miteinander überschneidet. In den Fig. 5 und 6 sind jeweils zwei Objekte 6, 7 gezeigt, bei denen die genannte Bedingung zutrifft. Aufgrund der mittels des optoelektronischen Sensors 8 ermittelten Geometrie, der Kontur, des Kontrastes und/oder der Farbe der Objekte 6, 7 ist auch bei den in den Fig. 5 und 6 gezeigten Anordnungen eine Unterscheidbarkeit der Objekte 6 und 7 problemlos möglich.

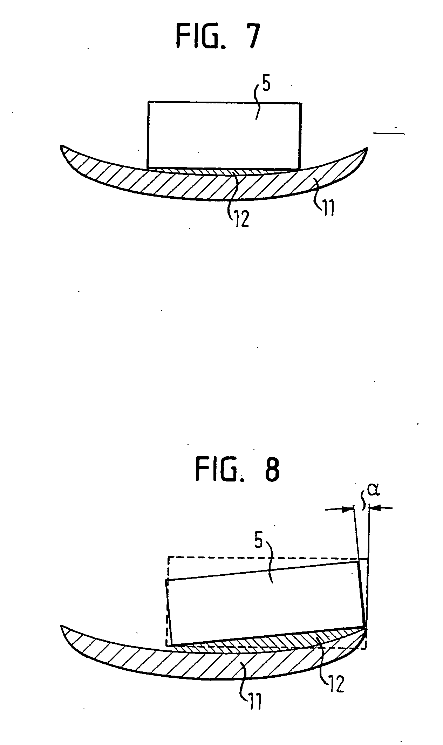

Fig. 7 zeigt ein als Schale 11 ausgebildetes Fördersegment in Schnittdarstellung mit einem darauf befindlichen Objekt 5.

Wenn nun bei einer solchen Anordnung gemäß einem Verfahren nach dem Stand der Technik das Volumen des Objektes 5 bestimmt werden soll, führt das zwischen Objekt 5 und Schale 11 eingeschlossene Volumen 12 in der Regel zu einem Messfehler.

Erfindungsgemäß kann jedoch die Geometrie der Oberfläche der Schale 11 vor dem eigentlichen Messvorgang beispielsweise durch Abtastung oder durch feste Wertevorgaben ermittelt werden, so dass aufgrund dieser bekannten Werte das zwischen Objekt 5 und Schalenoberfläche eingeschlossene Volumen 12 berechnet und von dem beim eigentlichen Messvorgang bestimmten Volumen abgezogen werden kann. Voraussetzung ist allerdings, dass das Objekt 5 eine ebene Grundfläche besitzt, da anderenfalls eine variierende Geometrie der Grundflächen von auf Schalen 11 aufliegenden Objekten 5 zu unterschiedlichen Werten bezüglich der zwischen Objekt 5 und Schale 11 eingeschlossenen Volumina führen würde. Bei ebener Grundfläche der Objekte 5 ist jedoch erfindungsgemäß durch die rechnerische Berücksichtigung des eingeschlossenen Volumens 12 eine korrekte Bestimmung des Objektvolumens möglich.

Die hinsichtlich Fig. 7 ermittelten erfindungsgemäßen Vorteile sind auch bei einer Anordnung gemäß Fig. 8 erzielbar, bei der das Objekt 5 um einen Winkel α verkippt auf der Schale 11 aufliegt. Durch eine vollständige Abtastung des Objektes 5 mittels des optoelektronischen Sensors 8 kann nämlich der Kippwinkel α ermittelt und bei der Berechnung des zwischen Objekt 5 und Schale 11 eingeschlossenen Volumens 12 berücksichtigt werden.

Bei einem Verfahren gemäß Stand der Technik wäre es hingegen in der Regel nur möglich, den in Fig. 8 gepunktet dargestellten kleinsten umhüllenden Quader zu bestimmten, welcher, was aus Fig. 8 gut ersichtlich ist, ein deutlich größeres Volumen aufweist, als das tatsächliche Objekt 5. Erfindungsgemäß ist hingegen eine korrekte Berechnung des Volumens des Objektes 5 möglich.

### Bezugszeichenliste

- 1: Fördersegment
- 2: Fördersegment
- 3: Fördersegment
- 4: Fördersegment
- 5: Objekt
- 6: Objekt
- 7: Objekt
- 8: optoelektronischer Sensor
- 9: Auswerte- und Datenverarbeitungseinheit
- 10: Barcode
- 11: Schale

## Patentansprüche

1. Verfahren zur Bestimmung der Abmessungen von auf einem Fördermittel (1-4) bewegten Objekten (5 - 7) mittels eines optoelektronischen Sensors (8), welcher die Abmessungen der Objekte (5-7) erfasst und dementsprechende, objektbezogene Werte liefert,
**dadurch gekennzeichnet ,**
**dass** der optoelektronische Sensor (8) zusätzlich auch die Abmessungen des Fördermittels (1 - 4) erfasst und dementsprechende, fördermittelbezogene Werte liefert, wobei durch eine Verrechnung der objektbezogenen Werte mit den fördermittelbezogenen Werten Fördermitteltoleranzen und/oder zwischen Objekt (5 - 7) und Fördermittel (1 - 4) ggf. vorhandene Hohlräume (12) kompensiert werden.

2. Verfahren nach Anspruch 1,
**dadurch gekennzeichnet ,**
**dass** die Abmessungen des Fördermittels (1 - 4, 11) und/oder der Objekte (5 - 7) in allen drei Dimensionen erfasst werden, wobei insbesondere die Sollabmessungen des Fördermittels (1-4, 11) gespeichert und mit den erfassten Istabmessungen des Fördermittels (1 - 4, 11) verglichen werden, wobei das Ergebnis dieses Vergleichs als Korrekturwert zur Kompensation herangezogen wird.

3. Verfahren nach einem der vorhergehenden Ansprüche,
**dadurch gekennzeichnet,**
**dass** die Objekte (5 - 7) von dem optoelektronischen Sensor (8) kontinuierlich über ihre gesamte, sich in Förderrichtung erstreckende Länge und/oder über ihre gesamte, sich quer zur Förderrichtung erstreckende Breite erfasst werden.

4. Verfahren nach einem der vorhergehenden Ansprüche,
**dadurch gekennzeichnet,**
**dass** nahe beieinander liegende oder aneinander angrenzende Objekte (5 - 7) aufgrund ihrer Konturen, ihres Kontrastes und/oder ihrer Farbe voneinander unterschieden werden.

5. Verfahren nach einem der vorhergehenden Ansprüche, bei dem die bewegten Objekte (5 - 7) mittels eines optoelektronischen Sensors (8) auf einem segmentierten Fördermittel erfasst werden,
**dadurch gekennzeichnet,**
**dass** über den optoelektronischen Sensor (8) jeweils der geometrische Schwerpunkt (S) der Objekte (5 - 7) bestimmt wird, woraufhin die Objekte (5 - 7) jeweils demjenigen Fördersegment (1 - 4) zugeordnet werden, in dessen Bereich sich der jeweils bestimmte Schwerpunkt (S) befindet.

6. Verfahren nach Anspruch 5,
**dadurch gekennzeichnet,**
**dass** auch solche Objekte (5 - 7) vollständig erfasst werden, die teilweise außerhalb eines Fördersegments liegen oder die sich im Bereich von zwei aufeinander folgenden Fördersegmenten (1 - 4) befinden.

7. Verfahren nach einem der Ansprüche 5 oder 6,
**dadurch gekennzeichnet,**
**dass** der geometrische Schwerpunkt (S) auf Grundlage der erfassten tatsächlichen Objektgrundfläche, der erfassten projizierten Objektgrundfläche, oder des erfassten Objektvolumens bestimmt wird.

8. Verfahren nach einem der Ansprüche 5 bis 7,
**dadurch gekennzeichnet,**
**dass** für diejenigen Fördersegmente (1-4), die mit einem Objekt (5 - 7) beschickt werden, ein Triggersignal erzeugt wird, wobei insbesondere die Dauer eines Triggersignals der in Förderrichtung verlaufenden Länge eines Fördersegments (1-4) entspricht, so dass das Triggersignal den Anfang und das Ende des Fördersegments (1-4) kennzeichnet.

9. Verfahren nach Anspruch 8,
**dadurch gekennzeichnet,**
**dass** die Zuordnung der Objekte (5 - 7) zu den Fördersegmenten (1 - 4) durch einen Vergleich der ermittelten Positionen der geometrischen Schwerpunkte (S) der Objekte (5 - 7) mit den über das Triggersignal ermittelten Positionen der mit Objekten (5 - 7) beschickten Fördersegmente (1 - 4) erfolgt, wobei insbesondere synchron sowie zeit- oder wegeverzögert zum Triggersignal ein Zuordnungssignal ausgegeben wird.

10. Verfahren nach einem der Ansprüche 5 bis 9,
**dadurch gekennzeichnet,**
**dass** ein auf einem Objekt (5 - 7) befindliches Element, insbesondere ein Code, ein Barcode (10) oder ein Adressaufkleber erfasst und einem Objekt (5 - 7) zugeordnet wird, wobei insbesondere ein erfasstes Element (10) demjenigen Objekt (5 - 7) zugeordnet wird, dessen geometrischer Schwerpunkt (S) oder dessen parallel zur Förderebene verlaufende Kontur dem erfassten Element (10) am nächsten ist.

11. Vorrichtung zur Bestimmung der Abmessungen von auf einem Fördermittel bewegten Objekten (5 - 7) mit einem optoelektronischen Sensor (8) zur Erfassung der Abmessungen der Objekte (5 - 7) und zur Bereitstellung entsprechender objektbezogener Werte,
**dadurch gekennzeichnet,**
**dass** der optoelektronische Sensor (8) zur zusätzlichen Erfassung der Abmessungen des Fördermittels (1 - 4, 11) und zur Bereitstellung entsprechender fördermittelbezogener Werte ausgelegt ist, wobei eine Kompensationseinheit (9) zur Kompensation von Fördermitteltoleranzen und/oder zwischen Objekt (5 - 7) und Fördermittel (1 - 4, 11) ggf. vorhandenen Hohlräumen (12) vorgesehen ist.

12. Vorrichtung nach Anspruch 11 zur Erfassung von auf einem segmentierten Fördermittel bewegten Objekten (5 - 7) mittels des optoelektronischen Sensors (8),
**dadurch gekennzeichnet,**
**dass** der optoelektronische Sensor (8) mit einer Auswerteeinheit (9) zur Bestimmung der geometrischen Schwerpunkte (S) der Objekte (5 - 7) gekoppelt ist, wobei eine Zuordnungseinheit zur Zuordnung der Objekte (5 - 7) zu demjenigen Fördersegment (1 - 4), in dessen Bereich sich der jeweils bestimmte Schwerpunkt (S) befindet, vorgesehen ist.

13. Vorrichtung nach einem der Ansprüche 11 oder 12 mit einer Datenverarbeitungseinheit (9) zu Durchführung eines Verfahrens nach einem der Ansprüche 1 bis 10.

14. Vorrichtung nach einem der Ansprüche 11 bis 13,
**dadurch gekennzeichnet,**
**dass** der optoelektronische Sensor (8) als Lichtschranke, als Scanner oder als Kamera ausgebildet ist, wobei er insbesondere zur Abstandsmessung ausgeführt ist, wobei insbesondere der optoelektronische Sensor (8) als Laserscanner mit quer oder schräg zur Förderrichtung verlaufender Abtastrichtung ausgeführt ist.

15. Vorrichtung nach einem der Ansprüche 11 bis 14,
**dadurch gekennzeichnet,**
**dass** der optoelektronische Sensor (8) oder eine mit ihm gekoppelte Auswerteeinheit (9) zur Codeerkennung und/oder Bildverarbeitung ausgelegt ist und/oder dass das Fördermittel als Förderband, Schalenförderer, Wannenförderer oder Crossbelt-Förderer ausgebildet ist.
